# NOUVEAU FASCICULE DE BREVET EUROPEEN

(11) **EP 1 217 239 B2**
(45) Date de publication et mention de la décision concernant l'opposition: **21.11.2012**
(45) Mention de la délivrance du brevet: 06.05.2009
(21) Numéro de dépôt: 01402931.8
(22) Date de dépôt: 15.11.2001
(51) Int. Cl.: F16D 23/02

(54) **Procédé de fabrication d'une bague de synchronisation de boîte de vitesses, notamment pour véhicule automobile et bague de synchronisation obtenue par un tel procédé**
Verfahren zur Herstellung eines Getriebesynchronisierringes, insbesondere zum Gebrauch in Fahrzeugen und nach diesem Verfahren hergestellter Synchronisierring
Manufaturing method for gearbox synchronizer ring, especially for use in a motor vehicle, and synchronizer ring obtained with this method

(30) Priorité: 22.12.2000 FR 0016992
(43) Date de publication de la demande: 26.06.2002
(73) Titulaire: Valeo Matériaux de Friction, 87020 Limoges cedex 9 (FR)
(72) Inventeur: Boule, Philippe, 87570 Rilhac-Rançon (FR); Pantier, Philippe, 87370 Lauriere (FR); Rommeru, Cécile, 87280 Limoges (FR)
(74) Mandataire: Jeuland, Mickaël

(56) Documents cités:
- EP-A- 0 785 247
- EP-A- 0 931 827
- EP-A1- 0 373 454
- EP-A2- 0 940 596
- EP-B1- 0 702 761
- WO-A1-95//26473
- DD-A- 203 567
- DE-A- 2 729 613
- DE-A1- 3 032 787
- DE-A1- 3 315 019
- DE-A1- 4 340 338
- DE-C- 890 586
- DE-T2- 69 003 788
- DE-T2- 69 820 429
- FR-A- 2 609 138
- FR-A- 2 760 504
- US-A- 3 912 639
- US-A- 5 707 942
- PATENT ABSTRACTS OF JAPAN vol. 1999, no. 13, 30 novembre 1999 (1999-11-30) & JP 11 223225 A (NIPPON SEIKO KK), 17 août 1999 (1999-08-17)

## Description

La présente invention concerne une bague de synchronisation de boîte de vitesses notamment pour véhicule automobile.

L'invention se rapporte plus particulièrement a un procédé de fabrication d'une telle bague appartenant à un synchroniseur.

Plus précisément une boîte de vitesses classique pour véhicule automobile comporte, à l'intérieur d'un carter rempli d'huile, au moins un arbre primaire, relié par un embrayage au moteur à combustion interne du véhicule automobile, et un arbre secondaire relié aux roues motrices du véhicule automobile.

Le carter porte des paliers pour montage à rotation de ces arbres portant chacun des pignons respectivement primaires et secondaires. Les pignons primaires sont par exemple solidaires de l'arbre primaire, tandis que les pignons secondaires sont montés fous sur l'arbre secondaire et comportent des surfaces de portée de frottement tronconiques de synchronisation. Les pignons fous sont de manière connue à verrouillage par des synchroniseurs comme décrit par exemple dans le document FR-A-2 609 138 auquel on se reportera pour plus de précisions.

On effectue un changement de rapport de transmission de mouvement en mettant en prise l'un des pignons primaires avec son pignon secondaire associé en fonction des conditions variables de résistance à l'avancement du véhicule automobile. Ceci est réalisé en déplaçant de manière manuelle ou automatique le synchroniseur concerné pour verrouiller le pignon secondaire en le rendant solidaire en rotation de l'arbre secondaire.

Pour ce faire le synchroniseur comporte au moins une bague de synchronisation dotée d'au moins une surface de portée de frottement tronconique susceptible de coopérer par friction avec une surface de portée de frottement tronconique complémentaire appartenant au pignon fou pour formation d'un accouplement conique.

L'accouplement conique travaille dans l'huile du carter de la boîte de vitesses et produit par friction le synchronisme c'est à dire l'entraînement en rotation du pignon fou en vue de l'engagement du rapport de transmission correspondant. Bien entendu les pignons fous en variante sont portés par l'arbre primaire et les pignons fixe par l'arbre secondaire. Le synchroniseur comporte également un moyeu lié en rotation à l'arbre secondaire- primaire concerné par une liaison à cannelures. Sur ce moyeu peut coulisser axialement un baladeur doté intérieurement de dents adaptées à venir en prise avec des dents complémentaires, que présentent la bague de synchronisation et le pignon fou adjacent. Les dents du baladeur viennent en prise avec celles du pignon fou pour un crabotage seulement après la synchronisation. Le plus souvent deux bagues de synchronisation sont disposées de part et d'autre du baladeur car le synchroniseur est monté entre deux pignons fous.

Le baladeur est déplaçable à l'aide d'un levier, tel qu'une fourchette, actionné par une tringlerie reliée au levier de changement de vitesses lorsque la boîte de vitesses est à commande manuelle ou à l'aide d'actionneurs, par exemple du type électromécanique, pilotés par un bloc électronique de calcul et de commande recevant des informations provenant de capteurs lorsque la boîte de vitesses est automatisée ou robotisée comme par exemple dans le document FR-A-2 609 138 précité.

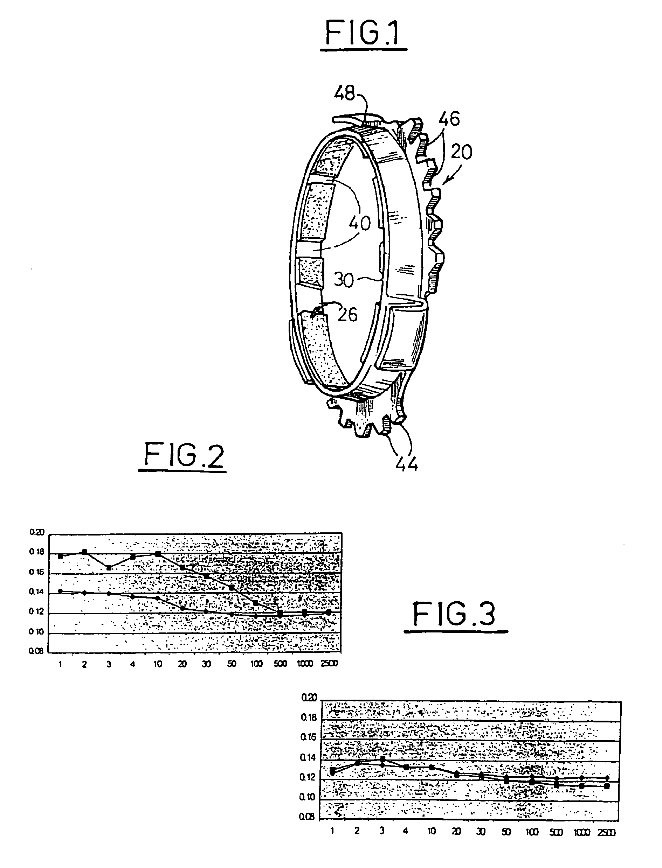

La figure 1 à titre d'exemple représente en perspective une bague de synchronisation décrite dans le document FR-A-2 751 712.

Cette bague 20 comporte un corps métallique 30 de forme générale tronconique doté intérieurement de manière précitée d'une surface tronconique de portée de frottement 26, ici concave.

Ce corps est donc délimité par une face latérale conique externe et par une face latérale conique interne revêtue d'une couche de matériau de frottement dont la surface périphérique interne tronconique constitue la surface de portée de frottement 26, aussi appelée cône de friction, destinée à coopérer avec une surface tronconique convexe complémentaire agencée sur le pignon fou.

Le matériau de frottement est moulable et est adapté à travailler dans l'huile. La couche de ce matériau de frottement est par exemple réalisée par surmoulage sur le cops métallique de la bague 20 La surface 26 comporte une série de rainures 40 d'orientation axiale avantageusement réalisées de matière avec le matériau de frottement.

La bague 20 présente également une collerette d'entraînement dont le bord périphérique 44 externe comporte des dents 46 susceptibles de coopérer avec des dents complémentaires appartenant au baladeur du synchroniseur concerné. La bague 20 comporte également des pattes axiales 48 formants des bossages d'appui et de positionnement axial de la bague de synchronisation.

En variante la bague de synchronisation peut être à double cône de friction ou à cône extérieur de friction comme illustré respectivement dans les figures 7 à 10 et la figure 11 du document FR-A-2 751 712 précité dans lequel le corps de la bague de synchronisation est réalisé par formage d'un flan de tôle.

Le corps de la bague est en variante en acier fritté recouvert de molybdène ou en variante en laiton ou en variante en laiton recouvert intérieurement d'un matériau de frottement à base de papier ou de carbone convenant bien à un frottement dans l'huile.

Dans tous les cas la bague de synchronisation est dotée extérieurement et/ou intérieurement d'une surface de portée de frottement tronconique appelée de manière usuelle cône de friction.

On constate lorsque la bague de synchronisation est neuve des difficultés lors du déplacement de celle-ci. Ainsi lorsque la boîte de vitesses est à commande manuelle le conducteur dans les premiers kilomètres de la durée de vie du véhicule automobile a des sensations désagréables lorsqu'il manoeuvre le levier de changement de vitesses pour changer de rapport de transmission. De telles sensations, qui disparaissent par la suite, sont un motif de plainte ; le conducteur n'étant pas satisfait.

La présente invention a pour objet de pallier cet inconvénient de manière simple et économique.

C'est donc un objet de l'invention d'améliorer le déplacement de la bague de synchronisation lors des premiers kilomètres du véhicule automobile.

Suivant l'invention un procédé de fabrication d'une bague de synchronisation du type sus - indiqué est caractérisé en ce que la surface de portée de frottement tronconique de la bague de synchronisation est en final trempée dans un bain d'huile doté d'additifs avant son montage dans la boîte de vitesses.

Grâce à l'invention on obtient un bon déplacement de la bague de synchronisation dès les premiers kilomètres du véhicule automobile et ce de manière confortable pour les passagers du véhicule automobile, notamment le conducteur de ce véhicule, qui ainsi peut passer de manière agréable les vitesses.

Grâce au procédé selon l'invention en fonctionnement on obtient dès les premiers kilomètres du véhicule automobile une bonne interface entre la surface de portée de frottement tronconique de la bague de synchronisation et sa surface complémentaire de portée de frottement tronconique appartenant par exemple au pignon fou adjacent et ce sans pic de charge particulièrement à la fin de la phase de synchronisation quand la vitesse différentielle est voisine de zéro.

Lorsque la boîte de vitesses est automatisée ou robotisée on peut diminuer la puissance du ou des actionneurs car le déplacement de la bague de synchronisation est réalisé avec un moindre effort dès les premiers kilomètres de la durée de vie du véhicule.

Grâce à l'invention on réduit les coûts car on supprime l'opération finale de traitement de surface de la dite surface de portée de frottement tronconique.

L'invention permet donc d'éviter un rodage de la surface de portée de frottement tronconique de la bague de synchronisation. et permet d'obtenir pour cette surface un coefficient de friction statique globalement égale à son coefficient de friction dynamique.

Avantageusement la surface de portée de frottement tronconique appartient à une couche de matériau de frottement présentant une structure poreuse, qui permet de bien recueillir les additifs.

Le matériau de frottement est dans un mode de réalisation du type de celui décrit dans le document WO 95/26473 auquel on se reportera pour plus de précisions. Ce type de matériau est économique et présente une stabilité remarquable en ce qui concerne son coefficient de friction. En outre il ne se dégrade pas pour les hautes températures atteintes par l'huile de la boîte de vitesses.

Comme additifs on peut utiliser de manière avantageuse, à titre d'exemples, les additifs suivants :
dithiophosphate de zinc ;
dithiophosphate de molybdène ;
triborate de potassium ;
phosphate de potassium.

De bons résultats ont été obtenus avec ces additifs.

Grâce à l'invention on peut diminuer de manière précitée la puissance de ou des actionneurs de manière précitée.

La description qui va suivre illustre l'invention en regard des dessins annexés dans lesquels :
la figure 1 est une vue en perspective d'une bague de synchronisation de l'art antérieur ;
les figures 2 et 3 sont des graphiques montrant les courbes caractéristiques des coefficients de friction respectivement statique et dynamique de la surface de portée de frottement tronconique de la bague de synchronisation respectivement avant et après le traitement selon l'invention.

La bague de synchronisation 20 de boîte de vitesses pour véhicule automobile illustrée à la figure 1 comporte de manière précitée une surface de portée de frottement tronconique 26, qui présente lorsqu'elle est montée dans la boîte de vitesse au début de la durée de vie du véhicule automobile un coefficient de friction statique différent de son coefficient de friction dynamique.

Plus précisément lors d'un changement de rapport de la boîte de vitesses il se produit de manière précitée une phase de synchronisation lors de laquelle il y a déplacement dans l'huile de la bague de synchronisation au contact de sa contre - pièce, usuellement le pignon fou adjacent, et donc intervention d'un coefficient de friction statique et d'un coefficient de friction dynamique.

Ces coefficients dépendent de paramètres, notamment de la surface complémentaire de portée de frottement avec laquelle est admise à coopérer ladite surface de la bague de synchronisation. Ici le coefficient de friction dynamique correspond au coefficient de friction que l'on mesure dans la première partie de la phase de synchronisation lorsque les vitesses de rotation relatives entre la bague de synchronisation et sa contre - pièce sont encore élevées, tandis que le coefficient de friction statique est mesuré à la fin de la phase de synchronisation lorsque les vitesses de rotation relatives entre ces deux pièces sont faibles

Dans les figures 2 et 3 on voit les courbes caractéristiques de ces coefficients de friction dans l'huile avec en abscisse la valeur des coefficients de frottement et en ordonnée le nombre de cycles de synchronisation. Ces essais sont réalisés sur un banc d'essais dans la même huile que celle de la boîte de vitesses avec une bague de synchronisation dont la surface de portée de frottement est admise à se déplacer et à coopérer avec une surface complémentaire de portée de frottement tronconique identique à celle que l'on trouve dans la boîte de vitesses. Ici le coefficient de friction statique est mesuré lorsque la vitesse de rotation relative entre ces deux surfaces complémentaires est de 30 tours par minute.

La figure 2 montre la situation avant mise en oeuvre du procédé selon l'invention. La courbe du haut est la courbe du coefficient de friction statique et la courbe du bas celle du coefficient de friction dynamique. Au départ, c'est à dire au début de la durée de vie du véhicule dans ses premiers kilomètres, le coefficient de friction statique est plus élevé que le coefficient de friction dynamique. Au bout de 500 cycles les deux courbes globalement se rejoignent en sorte que le déplacement de la bague est plus aisé. Dans les premiers kilomètres du véhicule automobile le déplacement de la bague 20 est moins facile.

L'invention réduit voir annule ce phénomène.

Ainsi suivant l'invention un procédé de fabrication d'une bague de synchronisation du type sus - indiqué est caractérisé en ce que la surface de portée de frottement tronconique 26 de la bague de synchronisation 20 est en final trempée dans un bain d'huile doté d'additifs avant son montage dans la boîte de vitesses.

La nature des additifs est déterminée en fonction des applications et de paramètres, notamment du temps de la température et de la pression, relevés à la fin de la phase de synchronisation et du temps de la phase de synchronisation.

On obtient de très bon résultat avec ce procédé. qui ne risque pas de détruire ou d'endommager la surface de portée de frottement de la bague de synchronisation car il prend en compte les conditions d'utilisation de la bague de synchronisation.

Dans le cas de la figure 1 c'est donc la couche en matériau de frottement qui subit en final un trempage dans le bain d'huile doté d'additifs. Ce matériau de frottement est avantageusement du type non tissé et est par exemple constitué par un mat de fibres imprégné d'une résine thermodurcissable qui, après une étape finale de cuisson, présente une structure poreuse à cellules communicantes. Le procédé de fabrication à sec de cette couche comporte une étape de moulage et de cuisson dans un moule sous pression. Ce matériau de frottement est par exemple du type de celui décrit dans le document WO 95/26473 et est donc constitué par un mat de fibres imprégné d'une résine de type thermodurcissable. Ce mat de fibres est un mat de fibres cardées, tandis que la résine du type thermodurcissable comporte un solvant polaire aqueux. Les fibres présentent une longueur au moins égale à 12 mm. La longueur moyenne des fibres est au plus égale à 120 mm. Les fibres sont choisies parmi le groupe des fibres de verre, de laine, de coton, de céramique, de polyacrylonitrile, de polyacrylonitrile préoxydées, d'aramide.

Dans un mode de réalisation des charges poudreuses sont incorporées au mat. Les dites charges poudreuses comprennent tout ou partie des éléments ou composés suivants : cuivre, laine de roche, carbone, tel que du coke et/ou fibres de carbone réduites en poudre, graphite, silicate de zirconium, sulfure de fer, alumine, caoutchouc, diatomées.

Dans un mode de réalisation des charges sous forme de pulpes sont incorporées au mat.

Lesdites pulpes comprennent tout ou partie des pulpes de verre, d'aramide, acrylique, de fibres phénoliques.

Dans une forme de réalisation la résine thermodurcissable est à base de résol.

Dans une forme de réalisation la résine thermodurcissable est additionnée de latex.

Pour plus de précisions on se reportera à cette demande WO 95/26473.

Avantageusement la couche en matériau de frottement comporte des zones de porosité différentes et contrôlées comme décrit dans le document FR-A- 2 760 504 auquel on se reportera pour plus de précisions.

Le procédé selon l'invention se combine bien avec ce type de matériau à structure poreuse permettant de bien recueillir les additifs.

La figure 3 montre que les courbes caractéristiques des coefficients de friction ou de frottement statique et dynamique sont très proches l'une de l'autre dès le départ ce qui est recherché, la courbe du coefficient de frottement de friction statique étant très légèrement au- dessus au début puis au bout seulement de 10 cycles devient inférieure.

De préférence l'huile du bain d'huile est identique à celle contenue dans la boîte de vitesses. En variante cette huile est compatible avec celle de la boîte de vitesses.

Bien entendu la surface de portée de frottement tronconique peut en variante appartenir à la périphérie externe de la bague de synchronisation. En variante la bague présente à sa périphérie interne et à sa périphérie externe une surface de portée de frottement tronconique. Tous les modes de réalisations du document FR A 2 751 712 précité sont donc envisageables.

Avantageusement la couche ou les couches de matériau de frottement est (sont) réalisée(s) par surmoulage, par exemple à une température de l'ordre de 180°, sur le corps annulaire métallique de la bague, la géométrie précise de la surface de portée de frottement tronconique étant obtenue par moulage en sorte qu'elle ne dépend pas de la précision de la réalisation, à la figure 1 par formage d'un flan de tôle, du corps. Cette précision dépend donc uniquement de la précision du moule et ne nécessite pas de reprise d'usinage. Bien entendu en variante il est possible de procéder à un dépôt préalable d'une résine ou d'une manière générale d'un adhésif sur le corps ou sur le matériau de frottement avant l'opération de surmoulage.

En variante cette fixation est réalisée par collage en sorte que le corps annulaire de la bague de synchronisation peut être en variante en matière plastique.

## Revendications

1. Procédé de fabrication d'une bague de synchronisation (20) de boîte de vitesses, notamment pour véhicule automobile, dotée extérieurement et/ou intérieurement d'une surface de portée de frottement tronconique (26), **caractérisé en ce que** le surface de portée de frottement tronconique (26) de la bague de synchronisation (20) est en final trempée dans un bain d'huile doté d'additifs avant son montage dans la boîte de vitesses.

2. Procédé de fabrication selon la revendication 1, **caractérisé en ce que** la surface de portée de frottement tronconique (26) de la bague de synchronisation (20) appartient à une couche en matériau de frottement à structure porteuse, qui subit en final un trempage dans ledit bain d'huile doté d'additifs.

3. Procédé de fabrication selon la revendication 2, **caractérisé en ce que** le matériau de frottement, de ladite couche est du type non tissé.

4. Procédé de fabrication selon la revendication 2 ou 3, **caractérisé en ce que** le matériau de frottement de ladite couche est constitué par un mat de fibres cardées imprégné d'une résine thermodurcissable, qui après une étape de cuisson présente une structure à cellules communiquantes.

5. Procédé de fabrication selon la revendication 4, **caractérisé en ce qu'**il comporte une étape de moulage et de cuisson dans un moule sous pression.

6. Procédé de fabrication selon la revendication 4 ou 5, **caractérisé en ce que** ladite couche comporte des zones de porosité différentes et contrôlées.

7. Procédé de fabrication selon l'une des revendications précédentes, **caractérisé en ce que** l'huile du bain d'huile est identique à celle contenue dans la boîte de vitesse.

8. Procédé de fabrication selon l'une quelconque des revendications 1 à 6, **caractérisé en ce que** l'huile du bain d'huile est compatible avec celle de la boîte de vitesses.

9. Procédé de fabrication selon l'une quelconque des revendications précédentes, **caractérisé en ce que** l'additif est un dithiophosphate de zinc ou un dithiophosphate de molybdène.

10. Procédé de fabrication selon l'une quelconque des revendications 1 a 9, **caractérisé en ce que** l'additif est un triborate de potassium ou un phosphate de potassium.

## Claims

1. Method for production of a gear box synchronisation ring (20), in particular for a motor vehicle, which is provided on its exterior and/or on its interior with a frusto-conical friction bearing surface (26), **characterised in that** the frusto-conical friction bearing surface (26) of the synchronisation ring (20) is finally dipped in an oil bath provided with additives, before being fitted in the gear box.

2. Production method according to claim 1, **characterised in that** the frusto-conical friction bearing surface (26) of the synchronisation ring (20) belongs to a layer of friction material with a porous structure, which is finally dipped in the said oil bath provided with additives.

3. Production method according to claim 2, **characterised in that** the friction material of the said layer is of the non-woven type.

4. Production method according to claim 2 or 3, **characterised in that** the friction material of the said layer consists of a mat of carded fibres impregnated with a thermosetting resin, which after a heating step has a structure with communicating cells.

5. Production method according to claim 4, **characterised in that** it comprises a step of moulding and heating in a mould under pressure.

6. Production method according to claim 4 or 5, **characterised in that** the said layer comprises areas of different, and controlled porosity.

7. Production method according to one of the preceding claims, **characterised in that** the oil of the oil bath is identical to that which is contained in the gear box.

8. Production method according to any one of claims 1 to 6, **characterised in that** the oil of the oil bath is compatible with that of the gear box.

9. Production method according to any one of the preceding claims, **characterised in that** the additive is a zinc dithiophosphate or a molybdenum dithiophosphate.

10. Production method according to any one of claims 1 to 9, **characterised in that** the additive is a potassium triborate or a potassium phosphate.

## Patentansprüche

1. Verfahren zur Herstellung eines Getriebesynchronisierrings (20), insbesondere für Kraftfahrzeuge, der außen und/oder innen mit einer kegelstumpfförmigen Reibungsträgerfläche (26) versehen ist, **dadurch gekennzeichnet, dass** die kegelstumpfförmige Reibungsträgerfläche (26) des Synchronisierrings (20) vor seiner Montage in das Getriebe abschließend in ein mit Additiven versehenes Ölbad eingetaucht wird.

2. Herstellungsverfahren nach Anspruch 1, **dadurch gekennzeichnet, dass** die kegelstumpfförmige Reibungsträgerfläche (26) des Synchronisierrings (20) zu einer Schicht aus einem Reibmaterial mit poröser Struktur gehört, die schließlich das Eintauchen in das mit Additiven versehene Ölbad erfährt.

3. Herstellungsverfahren nach Anspruch 2, **dadurch gekennzeichnet, dass** das Reibmaterial der besagten Schicht Vlies-artig ist.

4. Herstellungsverfahren nach Anspruch 2 oder 3, **dadurch gekennzeichnet, dass** das Reibmaterial der besagten Schicht aus einer mit einem Duroplast imprägnierten Krempelfasermatte besteht, die nach einem Brennvorgang eine Struktur von miteinander verbundenen Zellen darstellt.

5. Herstellungsverfahren nach Anspruch 4, **dadurch gekennzeichnet, dass** es einen unter Druck erfolgenden Schritt zur Formgebung und zum Brennen in einer Form umfasst.

6. Herstellungsverfahren nach Anspruch 4 oder 5, **dadurch gekennzeichnet, dass** die besagte Schicht Zonen mit unterschiedlicher sowie kontrollierter Porosität umfasst.

7. Herstellungsverfahren nach einem der vorangehenden Ansprüche, **dadurch gekennzeichnet, dass** das Öl des Ölbads identisch ist mit demjenigen, welches in dem Getriebe enthalten ist.

8. Herstellungsverfahren nach einem der Ansprüche 1 bis 6, **dadurch gekennzeichnet, dass** das Öl des Ölbads mit demjenigen des Getriebes kompatibel ist.

9. Herstellungsverfahren nach einem der vorangehenden Ansprüche, **dadurch gekennzeichnet, dass** das Additiv ein Zink-Dithiophosphat oder ein Molybdän-Dithiophosphat ist.

10. Herstellungsverfahren nach einem der Ansprüche 1 bis 9, **dadurch gekennzeichnet, dass** das Additiv ein Kalium-Triborat oder ein Kalium-Phosphat ist.
